# EUROPÄISCHE PATENTSCHRIFT

(11) **EP 1 814 692 B1**
(45) Veröffentlichungstag und Bekanntmachung des Hinweises auf die Patenterteilung: **12.08.2009**
(21) Anmeldenummer: 05810121.3
(22) Anmeldetag: 26.10.2005
(51) Int. Cl.: B23P 15/00, B21J 9/02, B21K 1/12, B21D 53/84

(54) **VERFAHREN UND EINRICHTUNG ZUR HERSTELLUNG VON STABILISATOREN**
METHOD AND DEVICE FOR PRODUCING STABILISERS
PROCEDE ET DISPOSITIF DE PRODUCTION DE STABILISATEURS

(30) Priorität: 05.11.2004 DE 102004053455
(43) Veröffentlichungstag der Anmeldung: 08.08.2007
(73) Patentinhaber: ThyssenKrupp Bilstein Suspension GmbH, 58256 Ennepetal (DE)
(72) Erfinder: MERTENS, Udo, 58802 Balve (DE)
(74) Vertreter: Döpp, Ludger
(86) Internationale Anmeldenummer: PCT/DE2005/001916
(87) Internationale Veröffentlichungsnummer: WO 2006/047990

(56) Entgegenhaltungen:
- EP-A- 0 895 883
- EP-A- 1 238 750
- DE-A1- 2 727 037
- DE-A1- 3 742 869
- DE-C1- 19 549 218
- DE-T2- 60 003 959
- PATENT ABSTRACTS OF JAPAN Bd. 2000, Nr. 04, 31. August 2000 (2000-08-31) -& JP 2000 024737 A (MITSUBISHI MOTORS CORP), 25. Januar 2000 (2000-01-25)
- PATENT ABSTRACTS OF JAPAN Bd. 1996, Nr. 01, 31. Januar 1996 (1996-01-31) -& JP 07 237428 A (NHK SPRING CO LTD), 12. September 1995 (1995-09-12)

## Beschreibung

Die Erfindung betrifft ein Verfahren zur Herstellung von Stabilisatoren, indem an einem Stabilisatorrohling mehrere Bearbeitungsschritte, wie Formgebungsprozesse der Endbereiche und Erzeugung von Ausnehmungen in den Endbereichen vorgenommen werden. Die erfindung betrifft ebenfalls eine Bearbeitungseinrichtung nach dem Oberbegriff des Anspruchs 9. Durch die DE 600 03 959 T2 ist ein Herstellungsverfahren für einen Rohrstabilisator bekannt geworden. In einem ersten Arbeitsschritt wird ein nahtgeschweißtes Rohr einer kontinuierlichen Warmumformung unterzogen. In einem weiteren Arbeitsschritt wird das Rohr einem Kaltziehvorgang unterworfen, wobei ein dickwandigeres Rohr erzeugt wird. In einem Biegeschritt wird das so erhaltene dickwandige Rohr im kalten Zustand in die gewünschte Stabilisatorform gebogen. Diesen Arbeitsschritten können sich bedarfsweise Wärmebehandlungen in vorgebbaren Temperaturbereichen anschließen.

In der DE-C 195 49 218 wird ein Verfahren zur Herstellung von Bauteilen aus Stabmaterial, insbesondere von Kfz-Fahrwerk-Stabilisatoren, beschrieben, die in mehreren Biegeschritten in ihre Endform gebracht werden, wobei von den Endabschnitten der Bauteile mindestens einer geprägt und gelocht ist, umfassend die folgenden Arbeitsschritte: Erwärmen des Stabmaterials, Biegen mindestens des mit der Prägung und der Lochung versehenen Endabschnitts, Prägen des gebogenen Endabschnitts, Lochen des gebogenen Endabschnitts, Fertigbiegen des Stabmaterials. Zur Erzeugung der Stabilisatoren wird das Stabmaterial vollständig erwärmt und in einem ersten Arbeitsschritt einer Grundformgebung unterzogen. Nacheinander werden dann die Endabschnitte weiterbearbeitet.

Der DE-A 37 42 869 ist eine rohrförmige Stabilisatorstange und ein Verfahren zur Herstellung derselben zu entnehmen. Ein rohr- oder stabförmiges Halbzeug wird vollständig erwärmt. Anschließend wird es im mittelbaren Bereich fest eingespannt, worauf an einem Ende des Halbzeuges Bearbeitungsvorgänge, wie Schmieden und Lochen vorgenommen werden. In einem Folgearbeitsschritt wird dann das andere Ende des Halbzeuges in gleicher Weise bearbeitet. Zum Einsatz gelangt ein zwölf Zylinder aufweisender Biegetisch. Nach der Bearbeitung wird ein Anlassvorgang durchgeführt, um eine Transformation von Martensit in getempertes Martensit sicherzustellen.

Die EP-A-895883 bildet den nächstliegenden Stand der Technik und offenbart die Merkmale der Oberbegriffe der Ansprüche 1 und 9*.*

Sie offenbart ebenfalls dass an einem fertig vorgebogenen Stabilisator-Grundkörper die beiden Endbereiche gleichzeitig erwürmt, die beiden erwärmten Endbereiche gleichzeitig einem Formgebungs prozess unterzogen und in den umgeformten Endbereichen gleichzeitig Ausnehmungen erzeugt werden sowie im Anschluß daran zumindest eine Kalibrierung der Ausnehmungen durchgeführt wird.

Der Erfindung liegt die Aufgabe zugrunde, ein Verfahren zur Herstellung von Stabilisatoren bereitzustellen, das eine hohe Produktivität bei der Fertigbearbeitung von durch Stabilisatorrohlinge gebildeten Grundkörpern mit sich bringt. Darüber hinaus soll eine Bearbeitungseinrichtung für derartige Stabilisatoren bereitgestellt werden, mit welcher die Verfahrensschritte bei hoher Durchlauf-Produktivität durchgeführt werden können.

Diese Aufgabe wird durch die Merkmale des Anspruchs 1 gelöst. Vorteilhafte Weiterbildungen des Erfindungsgegenstandes sind den zugehörigen verfahrensgemäßen Unteransprüchen zu entnehmen.

Diese Aufgabe wird durch die Merkmale des Anspruchs 9 gelöst.

Vorteilhafte Weiterbildungen der erfindungsgemäßen Bearbeitungseinrichtung sind den zugehörigen gegenständlichen Unteransprüchen zu entnehmen.

Am bereits fertig vorgebogenen Stabilisator-Grundkörper werden ausschließlich die Endbereiche erwärmt und wie beschrieben simultan bearbeitet. Durch diese Maßnahme kann die Produktivität beträchtlich erhöht werden.

Neben einer Produktivitätserhöhung wird durch das simultane Erwärmen und Bearbeiten der Endbereiche auch die Fertigungsgenauigkeit erhöht. Die erfindungsgemäß hergestellten Stabilisatoren weisen eine hohe Formgenauigkeit auf, weil durch das auf die Endbereiche beschränkte Erwärmen und Bearbeiten der Wärmeverzug des Stabilisators im Vergleich zu Verfahren, bei denen der gesamte Stabilisator-Grundkörper erwärmt wird, deutlich geringer ist. Die sich bei vollständiger Erwärmung des gesamten Stabilisator-Grundkörpers durch den Wärmeverzug ergebende Form- und Fertigungsungenauigkeit wird bei dem erfindungsgemäßen Verfahren wirksam verhindert.

Infolge des symmetrischen Aufbaus der jeweiligen Bearbeitungsstation können simultan die jeweiligen Endbereiche des Grundkörpers dem jeweiligen Bearbeitungsvorgang unterworfen werden, wodurch eine hohe Produktivität beim Durchlauf der Grundkörper durch die Bearbeitungseinrichtung gegeben ist. Die Stabilisatoren können beispielsweise mit einem ersten Greifer in die vorteilhafterweise als Induktionsstufe aufgebaute erste Bearbeitungsstation eingesetzt werden, so dass beide Enden der Grundkörper gleichzeitig induktiv erwärmt werden können. An diese Induktionsstufe können sich noch folgende weitere Bearbeitungsstationen anschließen: Plätten, Lochen, Kalibrieren. Optional können sich auch daran bedarfsweise noch weitere Bearbeitungsschritte, wie beispielsweise Schneiden anschließen, sofern das Endprodukt noch einen derartigen Bearbeitungsschritt benötigt.

Einem weiteren Gedanken der Erfindung gemäß, kommt zur Erhöhung der Produktivität beim Durchlauf der Grundkörper durch die Bearbeitungseinrichtung ein Mehrfachgreifer zum Einsatz, mittels welchem die Grundkörper durch die Bearbeitungseinrichtung getaktet werden. Hierbei kann die erste Greifeinrichtung des Mehrfachgreifers den jeweiligen Grundkörper aus der Induktionsstufe herausnehmen und in die Bearbeitungsstation für das Schmieden oder Plätten einsetzen. Gleichzeitig wird der Grundkörper aus der Bearbeitungsstation Schmieden oder Plätten in die Bearbeitungsstation Lochen weitertransportiert u.s.w.

Dadurch, dass eine jede Bearbeitungsstation bezüglich ihrer Spannsysteme und Werkzeuge symmetrisch aufgebaut ist sowie identische Werkzeugvorrichtungen beinhaltet, können die beiden Endbereiche eines jeden Grundkörpers simultan bearbeitet werden. In Kombination mit dem Mehrfachgreifer wird eine optimale Produktivität hinsichtlich des Durchlaufes der Grundkörper durch die Bearbeitungseinrichtung gewährleistet.

Grundsätzlich ist die Erfindung sowohl für die Bearbeitung von massiven Vollstabilisatoren als auch von Rohrstabilisatoren geeignet, wie sie beispielsweise im Fahrzeugbau einsetzbar sind.

Der Erfindungsgegenstand ist anhand eines Ausführungsbeispieles, das sich auf die Herstellung von Rohrstabilisatoren bezieht, in der Zeichnung dargestellt und wird wie folgt beschrieben. Es zeigen:
- Figur 1: Prinzipskizze eines Bearbeitungsdurchlaufes für Rohrstabilisatorrohlinge durch eine Bearbeitungseinrichtung;

- Figur 2: Prinzipskizze von einzelnen Bearbeitungsstationen der in Figur 1 dargestellten Bearbeitungseinrichtung.

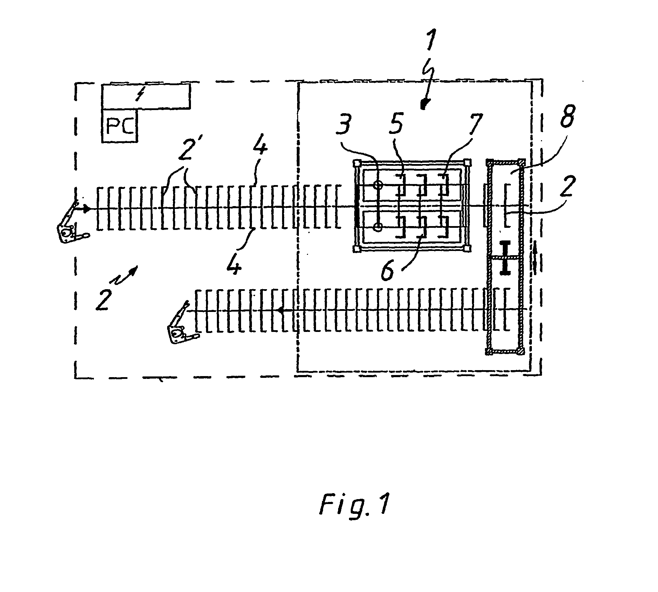

Figur 1 zeigt als Prinzipskizze eine Bearbeitungseinrichtung 1 zur Bearbeitung von in kaltem Zustand fertig vorgebogenen Rohrstabilisatoren 2. Die Bearbeitungseinrichtung 1 beinhaltet folgende Bearbeitungsstationen: gleichzeitiges induktives Erwärmen 3 der Endbereiche 4 der durch bereits vorgeformte, insbesondere vorgebogene, Grundkörper 2' gebildete Rohrstabilisatoren 2, gleichzeitiges Umformen 5 der erwärmten Endbereiche 4, gleichzeitiges Lochen 6 der umgeformten Endbereiche 4, gleichzeitiges Kalibrieren 7 der in der Bearbeitungsstation 6 eingebrachten Ausnehmungen.

Das Zuführen der Grundkörper 2' ist lediglich angedeutet, wobei hier beispielsweise ein Förderband oder ein Kettenförderer eingesetzt werden kann. Über einen nicht weiter dargestellten ersten Greifer kann der außerhalb der Bearbeitungseinrichtung 1 befindliche Grundkörper 2' in die mit Induktionsspulen ausgerüstete erste Bearbeitungsstation 3 eingebracht werden. Der in der Bearbeitungsstation 3 ausschließlich endbereichsseitig simultan erwärmte Grundkörper 2' kann entweder über einen weiteren einzelnen Greifer in die Folgebearbeitungsstation 5 oder aber über einen Mehrfachgreifer taktweise in die folgenden Bearbeitungsstationen 5,6,7 transportiert werden. Der besseren Übersicht halber sind die Greiferelemente in dieser Skizze nicht dargestellt, wobei zur Erhöhung der Produktivität vorteilhafterweise ein Mehrfachgreifer eingesetzt wird. Über eine ebenfalls nicht weiter dargestellte Rutsche kann der fertige Rohrstabilisator 2 in einen Pufferbereich 8 überführt werden und wird anschließend auf einen, ebenfalls nur angedeuteten, Abförderer aufgegeben.

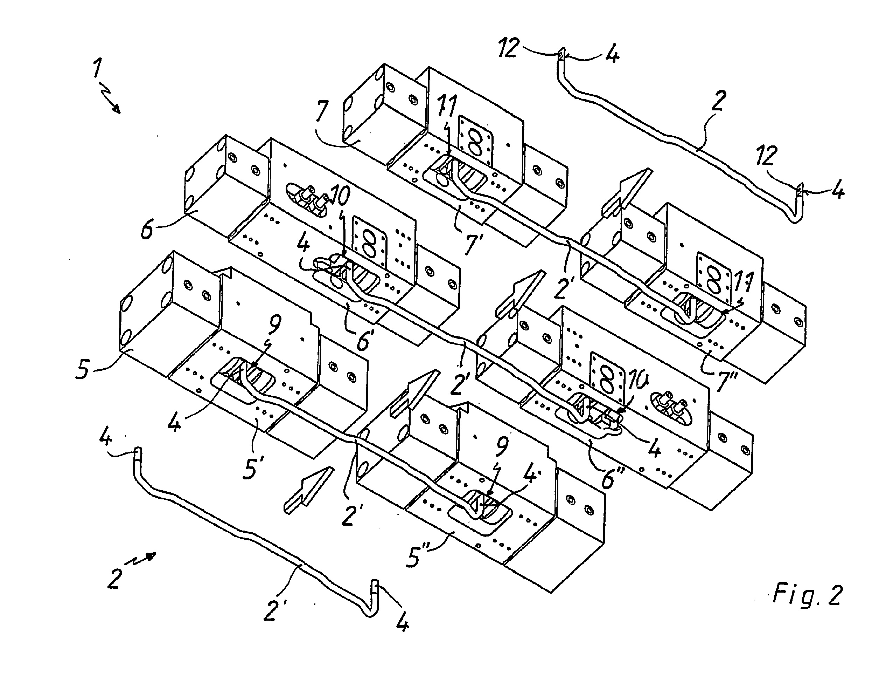

Figur 2 zeigt in vergrößerter Form einzelne Bearbeitungsstationen der Bearbeitungseinrichtung 1. Erkennbar sind die Bearbeitungsstationen 5,6 und 7. Eine jede Bearbeitungsstation 5,6,7 beinhaltet symmetrisch nebeneinander positionierte Bearbeitungsbereiche 5',5",6',6",7',7", so dass die Endbereiche 4 eines jeden bereits in kaltem Zustand fertig vorgebogenen Grundkörpers 2' in erfindungsgemäßer Weise gleichzeitig bearbeitet werden können. In dieser Figur wird vorausgesetzt, dass der Grundkörper 2', der außerhalb der Bearbeitungsstation 5 vorgesehen ist, bereits über erwärmte Endbereiche 4 verfügt. Durch die Pfeile ist der Taktvorgang des bereits in Figur 1 angesprochenen Mehrfachgreifers (hier nicht dargestellt) angedeutet. In der Bearbeitungsstation 5, respektive den Bearbeitungsbereichen 5',5", werden die erwärmten Endbereiche 4, in diesem Beispiel über nur angedeutete Spannsysteme/Werkzeuge 9 gehalten und einem ersten Bearbeitungsschritt, nämlichen einem Plättvorgang unterworfen. Die Endbereiche 4 werden mit eckigem Querschnitt versehen. In der Bearbeitungsstation 6, respektive den Bearbeitungsbereichen 6',6", werden die nun eckigen Endbereiche 4 durch nur angedeutete integrierte Positionier-/Spannsysteme/Werkzeuge 10 zur Erzeugung von Ausnehmungen gehalten und einem Lochvorgang unterworfen. Der Grundkörper 2' wird über die integrierten Positioniersysteme innerhalb der Bearbeitungsstation 6 fixiert. Danach werden die umgeformten Endbereiche 4 innerhalb der Bearbeitungsstation 6, respektive den Bearbeitungsbereichen 6"6", gleichzeitig, insbesondere hydraulisch, eingespannt und anschließend gelocht. In der Bearbeitungsstation 7, respektive den Bearbeitungsbereichen 7',7", werden die in der Bearbeitungsstation 6 erzeugten Ausnehmungen durch nur angedeutete integrierte Positionier-/Spannsysteme/Werkzeuge 11 gehalten und kalibriert. Der Grundkörper 2' wird mittels integrierter Positioniersysteme innerhalb der Bearbeitungsstation 7 fixiert. Danach werden die umgeformten und gelochten Endbereiche 4 gleichzeitig kalibriert. Die in der Bearbeitungsstation 6 erzeugten Ausnehmungen sind an dem fertigen Rohrstabilisator 2 mit dem Bezugszeichen 12 versehen. Der Rohrstabilisator 2 ist nun bereit für die Weiterverarbeitung (z.B. Strahlen, Lackieren). Bedarfsweise kann sich zur Ablängung der Endbereiche 4 des Rohrstabilisators 2 an die Bearbeitungsstation 7 noch eine weitere, nicht dargestellte Bearbeitungsstation anschließen, wobei dies jedoch rein optional ist.

### Bezugszeichenliste

- 1: Bearbeitungseinrichtung
- 2: Stabilisator, Rohrstabilisator
- 2': Grundkörper, Rohrstabilisatorrohling
- 3: erste Bearbeitungsstation - induktives Erwärmen
- 4: Endbereiche
- 5: weitere Bearbeitungsstation - Plätten
- 5': Bearbeitungsbereich
- 5": Bearbeitungsbereich
- 6: weitere Bearbeitungsstation - Lochen
- 6': Bearbeitungsbereich
- 6": Bearbeitungsbereich
- 7: weitere Bearbeitungsstation - Kalibrieren
- 7': Bearbeitungsbereich
- 7": Bearbeitungsbereich
- 8: Pufferbereich
- 9: Spannsystem/Werkzeug
- 10: Spannsystem/Werkzeug
- 11: Spannsystem/Werkzeug
- 12: Ausnehmungen

## Patentansprüche

1. Verfahren zur Herstellung von Stabilisatoren (2), indem an einem Stabilisatorrohling mehrere Bearbeitungsschritte, wie Formgebungsprozesse der Endbereiche (4) und Erzeugung von Ausnehmungen (12) in den Endbereichen (4), vorgenommen werden, **dadurch gekennzeichnet, dass** an einem in kaltem Zustand fertig vorgebogenen Stabilisator-Grundkörper (2') die beiden Endbereiche (4) gleichzeitig erwärmt, die beiden erwärmten Endbereiche (4) gleichzeitig einem Formgebungsprozess unterzogen und in den umgeformten Endbereichen (4) gleichzeitig Ausnehmungen (12) erzeugt werden sowie im Anschluss daran zumindest eine Kalibrierung der Ausnehmungen (12) durchgeführt wird, wobei der Grundkörper (2') taktweise durch die verschiedenen Bearbeitungsstationen (3,5,6,7) einer Bearbeitungseinrichtung hindurch geführt und in jeder Bearbeitungsstation (3,5,6,7) ausgerichtet gehalten wird.

2. Verfahren nach Anspruch 1, **dadurch gekennzeichnet, dass** in einer ersten Bearbeitungsstation (3) die beiden Endbereiche (4) des Grundkörpers (2') gleichzeitig induktiv erwärmt werden.

3. Verfahren nach Anspruch 1 oder 2, **dadurch gekennzeichnet, dass** in einer weiteren Bearbeitungsstation (5) die beiden erwärmten Endbereiche (4) gleichzeitig durch Plätten oder Schmieden umgeformt werden.

4. Verfahren nach einem der Ansprüche 1 bis 3, **dadurch gekennzeichnet, dass** in einer weiteren Bearbeitungsstation (6) in den umgeformten Endbereichen (4) gleichzeitig Ausnehmungen (12) durch Lochen eingebracht werden.

5. Verfahren nach einem der Ansprüche 1 bis 4, **dadurch gekennzeichnet, dass** in einer weiteren Bearbeitungsstation (7) die Ausnehmungen (12) gleichzeitig kalibriert werden.

6. Verfahren nach einem der Ansprüche 1 bis 5, **dadurch gekennzeichnet, dass** der Grundkörper (2') bzw. eine Mehrzahl von Grundkörpern (2') taktweise durch die einzelnen Bearbeitungsstationen (3,5,6,7) hindurchgeführt wird, wobei die einzelnen Bearbeitungsschritte an den Endbereichen (4) des/der Grundkörper(s) (2') simultan durchgeführt werden.

7. Verfahren nach einem der Ansprüche 1 bis 6, **dadurch gekennzeichnet, dass** der Transportvorgang des/der Grundkörper(s) (2') durch Greifer, insbesondere einen Mehrfachgreifer, vorgenommen wird.

8. Verfahren nach einem der Ansprüche 1 bis 7, **dadurch gekennzeichnet, dass** der jeweilige Grundkörper (2') im Anschluss an die Kalibrierung (7) der Ausnehmungen (12) in einen Pufferbereich (8) überführt oder aber mittels Abförderelementen einem weiteren Bearbeitungsvorgang zugeführt wird.

9. Bearbeitungseinrichtung für mit zwei Endbereichen (4) versehene Stabilisatorrohlinge, beinhaltend mehrere Bearbeitungsstationen (3,5,6,7), Spannsysteme für den jeweiligen Stabilisatorrohling im Bereich einer jeden Bearbeitungsstation (3,5,6,7) sowie mindestens ein Transportelement für den Weitertransport des jeweiligen Stabilisatorrohlings, **dadurch gekennzeichnet, dass** im Bereich der jeweiligen Bearbeitungsstation (3,5,6,7) symmetrisch aufgebaute Bearbeitungsbereiche (5',5",6',6",7',7") zur gleichzeitigen Durchführung der Bearbeitungsgänge "Erwärmen der Endbereiche (4)", "Formgebung der Endbereiche (4)", "Erzeugung von Ausnehmungen (12)" in den umgeformten Endbereichen (4) sowie "Kalibrierung der Ausnehmungen (12)" an einem in kaltem Zustand fertig vorgebogenen Stabilisator-Grundkörper (2') vorgesehen sind, wobei der jeweilige Grundkörper (2') in der jeweiligen Bearbeitungsstation (3,5,6,7), respektive dem jeweiligen Bearbeitungsbereich (5',5",6',6",7',7") über ein Kraft-Spannsystem während der Bearbeitung in ausgerichteter Weise gehalten ist.

10. Bearbeitungseinrichtung nach Anspruch 9, **dadurch gekennzeichnet, dass** die erste Bearbeitungsstation (3) zur gleichzeitigen induktiven Erwärmung der beiden Endbereiche (4) mit Induktionsspulen ausgerüstet ist.

11. Bearbeitungseinrichtung nach Anspruch 9 oder 10, **dadurch gekennzeichnet, dass** eine weitere Bearbeitungsstation (5) Spannsysteme/Werkzeuge (9) zum gleichzeitigen Schmieden oder Plätten der beiden erwärmten Endbereiche (4) beinhaltet.

12. Bearbeitungseinrichtung nach einem der Ansprüche 9 bis 11, **dadurch gekennzeichnet, dass** eine weitere Bearbeitungsstation (6) Spannsysteme/Lochwerkzeuge (10) zur gleichzeitigen Erzeugung von Ausnehmungen (12) in den beiden umgeformten Endbereichen (4) beinhaltet.

13. Bearbeitungseinrichtung nach einem der Ansprüche 9 bis 12, **dadurch gekennzeichnet, dass** eine weitere Bearbeitungsstation (7) Spannsysteme/Kalibrierwerkzeuge (11) zur gleichzeitigen Kalibrierung der in den beiden Endbereichen (4) eingebrachten Ausnehmungen (12) beinhaltet.

14. Bearbeitungseinrichtung nach einem der Ansprüche 9 bis 13, **dadurch gekennzeichnet, dass** der Transport des/der Grundkörper(s) (2') zwischen den jeweiligen Bearbeitungsstationen (3,5,6,7) über Greiferelemente, insbesondere einen Mehrfachgreifer, erfolgt.

## Claims

1. A method for the production of stabilizers (2) in which a stabilizer blank is submitted to several processing steps, such as forming processes of the end portions (4) and generation of recesses (12) in said end portions (4), **characterized in that** both end portions (4) of a stabilizer base body (2') that is readily pre-bent in cold state are simultaneously heated up, the two heated end portions (4) are simultaneously submitted to a forming process and recesses (12) are simultaneously created in the formed end portions (4) as well as after that, at least one calibration of the recesses (12) is carried out, wherein the base body (2') is guided clockwise through the different processing stations (3, 5, 6, 7) of a processing device and is held in an aligned manner in each processing station (3, 5, 6, 7).

2. A method according to claim 1, **characterized in that** both end portions (4) of the base body (2') are simultaneously heated up in an inductive manner in a first processing station (3).

3. A method according to claim 1 or 2, **characterized in that** both heated end portions (4) are simultaneously formed by flattening or forging in another processing station (5).

4. A method according to one of the claims 1 through 3, **characterized in that** recesses (12) are simultaneously created in the formed end portions (4) by punching in another processing station (6).

5. A method according to one of the claims 1 through 4, **characterized in that** the recesses (12) are simultaneously calibrated in another processing station (7).

6. A method according to one of the claims 1 through 5, **characterized in that** the base body (2') or a plurality of base bodies (2') is guided clockwise through the individual processing stations (3, 5, 6, 7), wherein the single processing steps are simultaneously carried out on the end portions (4) of the base body/bodies (2').

7. A method according to one of the claims 1 through 6, **characterized in that** the transport operation of the base body/bodies (2') is carried out by means of grippers, in particular a multiple gripper.

8. A method according to one of the claims 1 through 7, **characterized in that** after the calibration (7) of the recesses (12), the respective base body (2') is guided into a buffer zone (8) or supplied to another processing operation by means of conveying elements.

9. A processing device for stabilizer blanks provided with two end portions (4), comprising several processing stations (3, 5, 6, 7), clamping systems for the respective stabilizer blank in the region of each processing station (3, 5, 6, 7) as well as at least one transport element for the further transport of the respective stabilizer blank, **characterized in that** symmetrically configured processing areas (5', 5", 6', 6", 7', 7") for simultaneously carrying out the processing operations of "heating up the end portions (4)", "forming the end portions (4)", "creation of recesses (12)" in the formed end portions (4) as well as "calibration of the recesses (12)" in a stabilizer base body (2') that is readily pre-bent in cold state are provided in the area of the respective processing station (3, 5, 6, 7), wherein the respective base body (2') is held in an aligned manner during processing by means of a force clamping system in the respective processing station (3, 5, 6, 7) or the respective processing area (5', 5", 6', 6", 7', 7").

10. A processing device according to claim 9, **characterized in that** the first processing station (3) is provided with induction coils for the simultaneous inductive heating of the two end portions (4).

11. A processing device according to claim 9 or 10, **characterized in that** another processing station (5) comprises clamping systems/tools (9) for simultaneously forging or flattening the two heated end portions (4).

12. A processing device according to one of the claims 9 through 11, **characterized in that** another processing station (6) comprises clamping systems/punching tools (10) for simultaneously creating recesses (12) in the two formed end portions (4).

13. A processing device according to one of the claims 9 through 12, **characterized in that** another processing station (7) comprises clamping systems/calibration tools (11) for simultaneously calibrating the recesses (12) created in the two end portions (4).

14. A processing device according to one of the claims 9 through 13, **characterized in that** the transport of the base body/bodies (2') between the respective processing stations (3, 5, 6, 7) is carried out by means of grippers, in particular a multiple gripper.

## Revendications

1. Procédé de fabrication de stabilisateurs (2) dans lequel on soumet une ébauche de stabilisateur à plusieurs étapes d'usinage telles que des opérations de formage des parties d'extrémité (4) et la génération des évidements (12) dans les parties d'extrémité (4), **caractérisé en ce qu'**on chauffe simultanément les deux parties d'extrémité (4) d'un corps de base de stabilisateur (2') finalement pré-courbé en état froid, qu'on soumet les deux parties d'extrémité chauffées simultanément à une opération de formage et qu'on génère des évidements (12) simultanément dans les parties d'extrémité (4) formées ainsi qu'après cela on réalise un calibrage des évidements (12), le corps de base (2') étant guidé en cadence à travers des stations d'usinage différentes (3, 5, 6, 7) d'un dispositif d'usinage et étant tenu de manière dressée dans chaque station d'usinage (3, 5, 6, 7).

2. Procédé selon la revendication 1, **caractérisé en ce qu'**on chauffe simultanément les deux parties d'extrémité (4) du corps de base (2') de manière inductive dans une première station d'usinage (3).

3. Procédé selon la revendication 1 ou 2, **caractérisé en ce qu'**on forme les deux parties d'extrémité chauffées (4) simultanément par aplatissage ou forgeage dans une autre station d'usinage (5).

4. Procédé selon l'une des revendications 1 à 3, **caractérisé en ce qu'**on forme simultanément des évidements (12) par poinçonnage dans les parties d'extrémité (4) formées dans une autre station d'usinage (6).

5. Procédé selon l'une des revendications 1 à 4, **caractérisé en ce que** les évidements (12) sont simultanément calibrés dans une autre station d'usinage (7).

6. Procédé selon l'une des revendications 1 à 5, **caractérisé en ce que** le corps de base (2') ou une pluralité de corps de base (2) est guidé en cadence à travers les stations d'usinage individuelles (3, 5, 6, 7), les opérations individuelles d'usinage étant réalisées simultanément sur les parties d'extrémité (4) du/des corps de base (2').

7. Procédé selon l'une des revendications 1 à 6, **caractérisé en ce que** l'opération de transport du/des corps de base (2') est réalisé par moyen des preneurs, notamment un preneur multiple.

8. Procédé selon l'une des revendications 1 à 7, **caractérisé en ce qu'**après le calibrage (7) des évidements (12), le corps de base (2') respectif est guidé dans une zone tampon (8) ou est amené à une autre opération d'usinage par moyen des éléments de convoiement.

9. Dispositif d'usinage pour des ébauches de stabilisateur munies de deux parties d'extrémité, comprenant plusieurs stations d'usinage (3, 5, 6, 7), des systèmes de serrage pour l'ébauche de stabilisateur respective au niveau de chaque station d'usinage (3, 5, 6, 7) ainsi qu'au moins un élément de transport pour le transport de l'ébauche de stabilisateur respective, **caractérisé en ce que** des zones d'usinage (5', 5", 6', 6", 7', 7") configurées de manière symétrique pour la réalisation simultanée des opérations d'usinage de « chauffer les parties d'extrémité (4) », de « former les parties d'extrémité (4) », de « générer des évidements (12 » dans les parties d'extrémité formées ainsi que de « calibrer les évidements (12 » d'un corps de base de stabilisateur (2') finalement pré-courbé en état froid sont prévues au niveau de la station d'usinage respective, le corps de base respectif (2') étant tenu de manière dressée par moyen d'un système de serrage de force pendant l'usinage.

10. Dispositif d'usinage selon la revendication 9, **caractérisé en ce que** la première station d'usinage (3) est munie des bobines d'inductance pour simultanément chauffer les deux parties d'extrémité (4) de manière inductive.

11. Dispositif d'usinage selon la revendication 9 ou 10, **caractérisé en ce qu'**une autre station d'usinage (5) comprend des systèmes de serrage/des outils (9) pour simultanément forger ou aplatir les deux parties d'extrémité chauffées (4).

12. Dispositif d'usinage selon l'une des revendications 9 à 11, **caractérisé en ce qu'**une autre station d'usinage (6) comprend des systèmes de serrage/des outils de poinçonnage (10) pour simultanément générer des évidements (12) dans les deux parties d'extrémité (4) formées.

13. Dispositif d'usinage selon l'une des revendications 9 à 12, **caractérisé en ce qu'**une autre station d'usinage (7) comprend des systèmes de serrage/des outils de calibrage (11) pour simultanément calibrer les évidements (12) formés dans les deux parties d'extrémité (4).

14. Dispositif d'usinage selon l'une des revendications 9 à 13, **caractérisé en ce que** le transport du/des corps de base (2') entre les stations d'usinage respectives (3, 5, 6, 7) est réalisé par moyen des preneurs, notamment un preneur multiple.
